# NEUE EUROPÄISCHE PATENTSCHRIFT

(11) **EP 0 761 033 B2**
(45) Veröffentlichungstag und Bekanntmachung des Hinweises auf die Entscheidung über den Einspruch: **01.08.2001**
(45) Hinweis auf die Patenterteilung: 17.06.1998
(21) Anmeldenummer: 95918453.2
(22) Anmeldetag: 23.05.1995
(51) Int. Cl.: H02K 3/48, H02K 3/40

(54) **VERFAHREN ZUR BEFESTIGUNG VON LEITERSTÄBEN**
PROCESS FOR FASTENING CONDUCTIVE BARS
PROCEDE DE FIXATION DE BARRES CONDUCTRICES

(30) Priorität: 24.05.1994 AT 105294
(43) Veröffentlichungstag der Anmeldung: 12.03.1997
(73) Patentinhaber: VA TECH HYDRO GmbH & Co., 1140 Wien (AT)
(72) Erfinder: MÜLLER, Franz, A-8071 Grambach (AT); MUSSBACHER, Günther, A-8062 Kumberg (AT)
(74) Vertreter: VA TECH Patente GmbH
(86) Internationale Anmeldenummer: AT9500098
(87) Internationale Veröffentlichungsnummer: WO9532540

(56) Entgegenhaltungen:
- CH-A- 658 956
- DE-A- 2 506 790
- DE-A- 3 510 943
- DE-A- 4 025 439
- DE-C- 4 233 558
- US-A- 4 068 691
- US-A- 4 095 627
- US-A- 4 110 900
- Asea Journal, Vol.54, Nr. 2, 1981, S. 30

## Beschreibung

Die Erfindung betrifft ein Verfahren zur Befestigung von Leiterstäben insbesondere von Hochspannungswicklungen elektrischer Maschinen in Nuten der mit Lüftungsschlitzen versehenen Blechpakete, bei dem die Leiterstäbe mit einem elektrisch leitfähigen vernetzten Elastomer mit der Nut verklebt werden, wobei das unvernetzte Elastomer als weiche Masse in die Nut eingebracht, in dieses eingebettet, auf der zur Nutöffnung weisenden Stabseite des Elastomers ergänzt und der Leiterstab bis zum Vernetzen des Elastomers fixiert wird.

Aus der AT-PS 386 705 ist ein Verfahren zur Wicklungsbefestigung bekannt, bei welchem die Leiterstäbe mit einem elektrisch Leitfähigen vernetzten Polymer mit der Nut verklebt werden, so daß eine wirkungsvolle Befestigung der Leiterstäbe garantiert ist. Ein gewisser Nachteil liegt jedoch darin, daß durch das Einbringen einer unkontrollierten Polymermasse, bei Maschinen mit Lüftungsschlitzen, diese in die Lüftungsschlitze abfließt. Eine Reduzierung des Kühlquerschnittes ist die Folge, wodurch es zu unzulässigen Wärmentwichlungen kommen kann.

In der DE-A1-4 025 439 ist weiters eine Anordnung mit Wicklungsträger und Wicklungsstäben beschrieben, bei welcher zwischen jeder Nutwand und einer Stabkante des Wicklungsstabes eine Füllung aus einer gummielastischen, elektrisch leitfähigen Masse liegt, um mechanisch und elektrisch hoch belastbare Verbindungen zwischen der Schutzschicht des Wicklungsstabes und den Nutwänden geschaffen wird, sodaß die Bildung von Glimmentladungen und Funken in der Nut praktisch ausgeschlossen werden kann. Die Fixierung des Wicklungsstabes erfolgt vorzugsweise bei dieser Anordnung mittels einer zwischen Nutkeil und Staboberseite wirkenden Blattfeder.

Der Ordnung halber muß jedoch darauf hingewiesen werden, daß in der oben erwähnten AT-PS-386 705 eine Glimmeschutzanordnung durch diese Befestigungsart nicht ersetzt wird.

Wie ja an sich bekannt ist, setzt ein wirksamer Glimmschutz voraus, daß die Isolierhülse an der Oberfläche vollständig benetzt ist. An Fehlstellen würden sonst Teilentladungen auftreten. Um dies zu vermeiden. muß, fertigungstechnisch bedingt, die Glimmschutzschicht, beispielsweise ein Silikongummi, mit einem Trägermaterial vor dem Stabeinbau auf die Hülse lückenlos aufgebracht werden.

Die oben zitierte Befestigung des Leiterstabes kann aufgrund der Eigenschaften der Befestigungsmethode den Glimmschutz keinesfalls ersetzen.

So ist auch aus der DE-PS 1164562 eine Glimmschutzanordnung bekannt bei der als Befestigung eine recht aufwendige Einbettung des Leiterstabes in eine unnachgiebige Füllmasse zwischen zwei Trennfolien erfolgt. Dadurch hat der Stab die Möglichkeit, eine Gleitbewegung in axialer Richtung auszuführen.

Darüber hinaus ist aus der US-PS 4 068 691 eine Vorrichtung bekannt, mit der ein Elastomere bei eingelegter Wicklung vom Luftschlitz aus eingebracht werden kann. Die Benetzung mit Elastomere erfolgt nur seitlich zwischen der Staboberfläche und der Nutwand. Durch diese Art der Befestigung kann es zu Lockerungen im Nutkeilbereich kommen.

Aufgabe der Erfindung ist es. ein Verfahren der eingangs zitierten Art zu schaffen, mit dem die Wicklung dauerhaft und sicher befestigt wird bzw. bei vertikalen Maschinen ein Absinken der Wicklung sicher vermieden wird.

Das erfindungsgemäße Verfahren ist dadurch gekennzeichnet, daß das Elastomer etwa in der Teilpaketmitte am Nutgrund, und auf der Staboberseite und am Zwischenstück dosiert eingebracht wird, wobei die Verteilung des Elastomers durch das Eindrücken des Leiterstabes bzw. des Zwischenstückes und gegebenenfalls des Nutkeiles erfolgt, daß am Nutgrund bzw. an den zum Nutgrund parallelen Flächen eine vorwiegend geschlossene Elastomerschicht sich ergibt und die Elastomerschicht an den Nutflanken sich ausbreitet.

Mit der Erfindung ist es erstmals möglich, die Wicklung elastisch und mechanisch spannungsfrei mit dem Blechpaket zu verkleben. Etwaige Wärmespannungen werden durch die Elastizität des Elastomere aufgenommen. Darüberhinaus ist auch eine verbesserte Wärmeabfuhr - gegenüber der konventionellen Auskeilmethode - von Leiterstab zu Blechpaket gegeben.

Der gravierendste Vorteil ist aber vor allem darin zu sehen, daß durch die dosierte Elastomere-Einbringung die Kühlkanäle bzw. deren Querschnitt nicht reduziert werden.

Die Ermittlung der genauen Dosiermenge kann rechnerisch erfolgen. Es hat sich jedoch auch gezeigt, daß bei einer empirischen Ermittlung über ein Musterstück aufgezeichnete Ergebnisse erzielt werden. Ein etwaiges Austreten des Elastomere in den Kühlkanal ist nicht gegeben.

Der Ordnung halber werden die erfindungsgemaßen Verfahrensschritte aufgezeigt:

Mit der Dosiereinrichtung, die eine Spritzpistole mit einer Einspritzdüse umfassen kann, wird das Elastomere in die Nut eingebracht. Die Breite der Einspritzdüse ist auf die Nutbreite abgestimmt und weist zwei Anlaßöffnungen auf.

In die vorbereiteten Nuten wird mit Hilfe dieser Dosiereinrichtung das Elastomere in Teilpaketmitte eingebracht. Es wird also die Elastomeremenge in Tropfenform in jede Kante Nutgrund - Nutflanke durch die Auslaßöffnungen der Dosiervorrichtung plaziert.

Die Unterstäbe werden so in die Nuten gedrückt, daß das Elastomere sich am Nutgrund und teilweise an den Nutflanken verteilt, aber nicht in die Lüftungsschlitze gedrückt wird. Das Hineindrücken der Leiterstäbe bedarf aber keiner ausgewogenen Zentrierung oder besonderer Abstände.

Es ergibt sich somit am Nutgrund bzw. in weiterer Verfahrenfolge an den zum Nutgrund parallelen Flächen eine vorwiegend geschlossene Elastomere-schicht. wobei die Elastomereschicht an den Nutflanken sich etwa halbkreisförmig ausbreitet.

Mit Hilfe von bearbeiteten Preßleisten und Spannvorrichtungen wird der Unterstab provisorisch fixiert, bis die Klebeverbindung ausreichend fest ist.

Nach dem Entfernen der Preßleisten wird auf die Unterstabe wie im Nutgrund das Elastomere dosiert eingebracht und das Zwischenstück eingelegt.

Die Befestigung der Oberstäbe erfolgt analog der Unterstab-Befestigung. Bevor jedoch das Elastomere auf die der Nutöffnung weisende Fläche des Oberstabes dosiert wird, wird der Nutkeil eingeschoben.

Der Nutkeil ist spritzgegossen und weist eine brandhemmende, glasfaserverstärkte Ausführung auf. Gemäß einer besonderen Ausgestaltung der Erfindung weist der Nutkeil mittig eine Bohrung auf, durch die mittels einer Nadeldosiervorrichtung das Elastomere unter Druck eingebracht wird. Es wird mit vorzugsweise 6 bar eingepreßt und zwar so viel bis das Elastomere im Lüftungsschlitzbereich sichtbar wird..

Danach erfolgt die vollständige Vernetzung des Elastomere.

Gemäß einem besonderen Merkmal der Erfindung ist dieses Verfahren für Hochleistungsmaschinen, die schmale und hohe Teilpakete aufweisen, prädestiniert. Entsprechend der erfindungsgemäßen Ausgestaltung sind die Lüftungsschlitze zwischen den Teilpaketen mit Luftschlitzabdeckungen versehen.

Insbesondere bei den Turbogeneratoren findet dieses erfindungsgemäße Verfahren seine Anwendung.

Bei hohen Stäben wird mit der vorbeschriebenen Methode nur eine beispielsweise geringe Vernetzungshöhe mit den Nutflanken erreicht.

Eine geringe Vernetzungshöhe bedeutet aber eine schlechte Wärmeabfuhr vom Leiterstab in das Blechpaket. Normalerweise würde man einfach mehr Elastomere dosieren. Dies würde jedoch zu Elastomere-Austritt in die Luftschlitze und damit zu einer Reduzierung des Luft-Kühl-Ouerschnittes führen.

Erfindungsgemäß wird daher der Luftspalt mit einer Luftschlitzabdeckung versehen. Gemäß einer Ausgestaltung der Erfindung ist diese ein aus Kunststoff bestehender Spritzgußteil.

Durch diese Luftschlitzabdeckung ist zwar die Kühlwirkung im Luftspalt unwesentlich geringer, durch die durchgehende vollständige Benetzung des Leiterstabes ist jedoch eine ausgezeichnete Wärmeübertragung von Staboberfläche zu Blechpaket gegeben. Die erzielte bessere Wärmeübertragung gleicht bei weitem die reduzierte Kühlwirkung aus, sodaß in Summe gesehen eine höhere Wärmeabfuhr erreicht wird.

Im Gegensatz zum eingangs beschiebenen Verfahren wird bei der Verwendung von Luftschlitzabdeckungen das Elastomere nicht quasi tropfenweise dosiert, sondern in die Kante Nutgrund - Nutflanke wird ein genau dosierter und durchgehender Strang von Elastomere eingebracht.

Die Erfindung wird an Hand von Ausführungsbeispielen. die in der Zeichnung dargestellt sind, näher erläutert. Die Fig. la bis le zeigt die ersten Verfahrensschritte, Fig. 2 die Ausbreitung der Elastomere-Schicht, Fig. 3 das Einpressen der Elastomere-Masse mittels der Nadeldosiervorrichtung und die Fig. 4 die Befestigung eines Leiterstabes eines Turbogenerators.

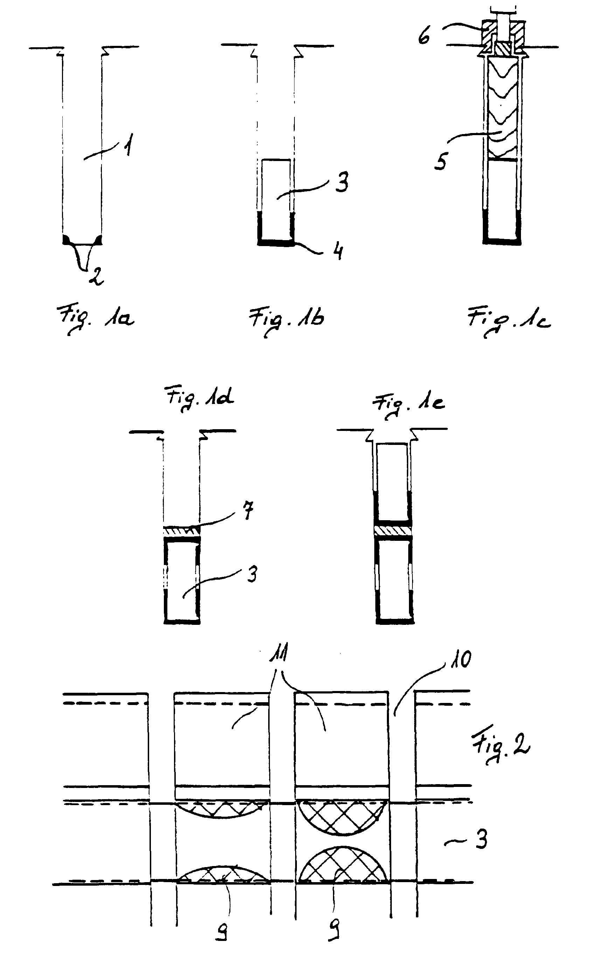

Gemäß der Fig. 1a wird in die Nut 1 mit Hilfe der Dosiereinrichtung zwei tropfenartige genau dosierte Elastomere-Massen 2 in der Teilpaketmitte eingebracht. Durch das Eindrücken des Unterstabes 3 verteilt sich die Elastomere-Masse am Nutgrund zu einer geschlossenen Schicht 4 bzw. steigt die Elastomere-Schicht an den Nutflanken hoch (Fig. 1b). Mit Hilfe von bearbeiteten Preßleisten 5 (Fig. 1c) und Spannvorrichtungen 6 wird der Unterstab 3 provisorisch fixiert und zwar solange bis die Klebeverbindung zwischen Unterstab 3 und Nut 1 ausreichend fest ist. Nach dem Bandagieren und Prüfen der Unterstäbe 3 werden die Spannvorrichtungen 6 und die Preßleisten 5 entfernt. Auf die Unterstäbe 3 wird wie im Nutgrund die gleiche Menge Elastomere mit der Dosiereinrichtung eingebracht und das Zwischenstück 7 eingelegt (Fig. 1d). Die Befestigung der Oberstäbe 8 erfolgt analog der Unterstab-Befestigung.

Der Vollständigkeit halber wird erwähnt, daß beim zum Stand der Technik zählenden Verfahren nach dem Einlegen der Oberstäbe auf deren Oberseite mit einer kleinen Düse ein weiterer Elastomeretropfen aufgebracht und der Rutschstreifen aufgelegt wird.

Wie aus Fig. 2 ersichtlich steigt die Elastomere-Masse 9 beim Eindrücken der Unterstäbe 3 hoch bzw. beim Einlegen der Zwischenstücke 7 fließt die Elastomere-Masse in Richtung Leiterstabmitte. In die Luftschlitze 10 der Teilpakete 11 fließt kein Elastomere ab. Es kommt also zu keiner Verengung des Kühl-Querschnittes.

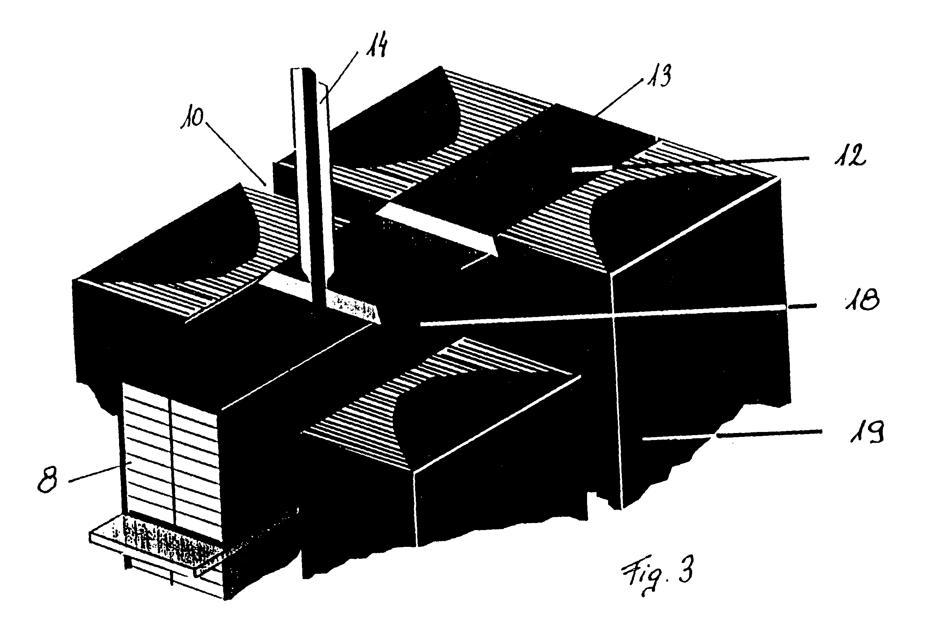

Gemäß der Fig. 3 ist der abschließende Verfahrensschritt aufgezeigt. Nach dem Einlegen des Oberstabes in das Blechpaket 19 wird der Nutkeil 12 eingeschoben. Dieser Nutkeil 12 hat mittig eine Bohrung 13. Mit einer Nadeldosiereinrichtung 14 wird die Elastomeremasse 18 auf die Oberfläche des Oberstabes 8 gepreßt. Dieser Vorgang wird beendet, wenn es Anzeichen gibt, daß das Elastomere im Kühlschlitzbereich 10 sichtbar wird. Danach erfolgt die vollständige Vernetzung des Elastomere.

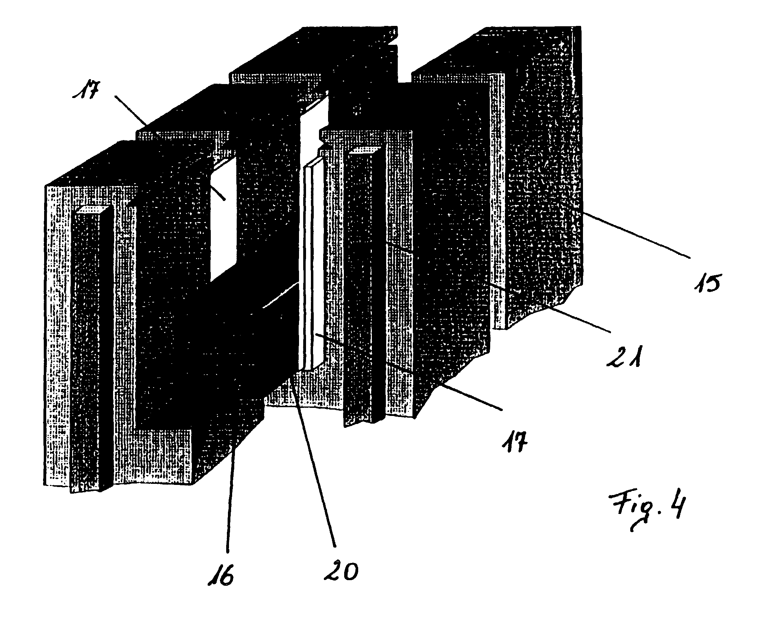

Gemäß der Fig. 4 ist ein Teil eines Blechpaketes für einen Turbogenerator dargestellt. Die Teilpakete 15 eines derartigen Blechpaketes weisen ein ungünstiges Verhältnis von Paketbreite zu Nuthöhe auf. Wie bereits erwähnt, würde ein schlechter Wärmeübergang von Leiterstab 16 gegeben sein, wenn nach dem vorher aufgezeigtem Verfahren die Leiterstäbe befestigt würden. Um nun einen ausreichenden Wärmeübergang zu schaffen, werden Luftschlitzabdeckungen 17 vorgesehen. Die Luftschlitzabdeckungen 17 verringern kaum den Kühlungs-Querschnitt. In den KühlQuerschnitt ragen auch die Lüfterstege 21. Durch die Anbringung dieser Luftschlitzabdeckungen 17 kann aber auf die Ecken Nutgrund - Nutflanke und deren Korrespondierende ein Elastomere-Strang dosiert werden. Durch die größere Elastomere-Masse-Einbringung wird eine weit größere Verklebungsfläche 20 zwischen Leiterstab 16 und Nut erreicht, sodaß auch ein ausgezeichneter Wärmeübergang von Leiterstab 16 und Blechpaket gegeben ist. Der bessere Wärmeübergang wiegt den Kühl-Querschnitt-Verlust für die Luftschlitzabdeckung 17 bei weitem auf.

## Patentansprüche

1. Verfahren zur Befestigung von Leiterstäben (3, 8, 16), insbesondere von Hochspannungswicklungen elektrischer Maschinen, in Nuten (1) der mit Lüftungsschlitzen (10) versehenen Blechpakete, bei dem die Leiterstäbe (3, 8, 16) mit einem elektrisch leitfähigen, vernetzten Elastomer mit der Nut verklebt wird, wobei das unvernetzte Elastomer als weiche Masse in die Nut (1) eingebracht, in dieses unvernetzte Elastomer der Leiterstab eingebettet, auf der zur Nutöffnung weisenden Stabseite das Elastomer ergänzt und der Leiterstab bis zum Vernetzen des Elastomers fixiert wird, **dadurch gekennzeichnet, daß** das Elastomer etwa in der Teilpaketmitte am Nutgrund und auf der Staboberseite und am Zwischenstück dosiert eingebracht wird, wobei die Verteilung des Elastomers durch das Eindrücken des Leiterstabes (3, 8, 16) bzw. des Zwischenstückes und gegebenenfalls des Nutkeiles (12) so erfolgt, daß am Nutgrund bzw. an den zum Nutgrund parallelen Flächen sich eine vorwiegend geschlossene Elastomerschicht ergibt und die Elastomerschicht sich an den beiden Nutflanken ausbreitet.

2. Verfahren nach Anspruch 1, **dadurch gekennzeichnet, daß** vor der abschließenden Einbringung der Elastomerschicht ein Nutkeil (12) vorgesehen wird, der mittig eine Bohrung (13) aufweist, durch die mittels einer Nadeldosiervorrichtung das Elastomer unter Druck eingebracht wird.

3. Verfahren nach Anspruch 1 oder 2, insbesondere für eine Hochleistungsmaschine, die schmale und hohe Teilpakete aufweist, **dadurch gekennzeichnet, daß** die Lüftungsschlitze (10) zwischen den Teilpaketen mit Luftschlitzabdeckungen (17) versehen sind.

4. Verfahren nach Anspruch 3, **dadurch gekennzeichnet, daß** die Luftschlitzabdeckungen (17) ein aus Kunststoff bestehendes Spritzgussteil sind.

## Revendications

1. Procédé de fixation de barres conductrices (3, 8, 16), en particulier pour des enroulements haute tension de machines électriques, dans les rainures (1) d'empilages de tôles pourvues de fentes d'aération (10), dans lequel les barres conductrices (3, 8, 16) sont collées dans les rainures avec un élastomère réticulé et conducteur d'électricité, l'élastomère non réticulé étant mis dans la rainure (1) sous la forme d'une masse molle, la barre conductrice étant insérée dans cet élastomère non réticulé, l'élastomère se conformant au côté de la barre faisant face à l'ouverture de la rainure et la barre conductrice étant tenue jusqu'à la réticulation de l'élastomère, caractérisé en ce que l'élastomère est placé de manière dosée, à peu près au milieu du fond de la rainure et sur le dessus de la barre et sur une pièce intermédiaire, la répartition de l'élastomère résultant de l'enfoncement de la barre conductrice (3, 8, 16) ou de la pièce intermédiaire (7) et, le cas échéant, d'une clavette (12) dans la rainure, de sorte que l'on obtient sur le fond de la rainure ou sur des surfaces parallèles au fond de la rainure, une couche d'élastomère sensiblement compacte, cette couche s'étendant également sur les deux flancs de la rainure.

2. Procédé selon la revendication 1, caractérisé en ce qu'avant l'application de la couche d'élastomère, on place une clavette (12) dans la rainure, ayant au milieu un trou circulaire (13) permettant d'introduire l'élastomère, sous pression, à l'aide d'un doseur à aiguille.

3. Procédé selon la revendication 1 ou 2, en particulier pour une machine à haute puissance, présentant des parties d'empilage hauts et étroits, caractérisé en ce que les fentes d'aération (10) entre les parties d'empilages sont pourvues de couvercles (17) de fentes d'aération.

4. Procédé selon la revendication 3, caractérisé en ce que les couvercles (17) de fentes d'aération sont un élément en plastique moulé par injection.

## Claims

1. A method of securing conductive bars (3, 8, 16), more particularly high voltage windings of electrical machines, in grooves (1) of laminated sheet plates provided with ventilation slots (10), in which the conductive bars (3, 8, 16) are bonded to the groove by means of an electrically conductive, interlaced elastomer, the non-interlaced elastomer being introduced into the groove (1) as a soft mass, the conductive bar being embedded in said non-interlaced elastomer, the elastomer being supplemented on the bar side facing the groove opening and the conductive bar being fixed until the elastomer is interlaced, characterised in that the elastomer is applied in dosed fashion approximately in the centre of the partial laminate to the groove base and to the upper side of the bar and to the intermediate element, the distribution of the elastomer being effected by the pressing-in of the conductive bar (3, 8, 16) or of the intermediate element and optionally of the groove wedge (12) in such a manner that a predominantly closed elastomer layer is formed on the groove base or on the surfaces parallel to the groove base and the elastomer layer spreads over both groove flanks.

2. A method according to claim 1, characterised in that, prior to the final application of the elastomer layer, a groove wedge (12) is provided, which in its centre comprises a bore (13), through which the elastomer is applied under pressure by means of a needle dosing device.

3. A method according to claim 1 or 2, more particularly for a high capacity machine, which comprises narrow and high partial laminates, characterised in that the ventilation slots (10) between the partial laminates are provided with ventilation slot covers (17).

4. A method according to claim 3, characterised in that the ventilation slot covers (17) are an injection moulded part made of plastics material.
